# EUROPEAN PATENT SPECIFICATION

(11) **EP 4 492 858 B1**
(45) Date of publication and mention of the grant of the patent: **08.04.2026**
(21) Application number: 22930314.4
(22) Date of filing: 10.03.2022
(51) Int. Cl.: H04W 24/10, H04W 84/12

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(43) Date of publication of application: 15.01.2025
(73) Proprietor: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/080244
(87) International publication number: WO 2023/168675

(56) References cited:
- EP-A1- 3 278 619
- EP-A1- 3 400 741
- WO-A1-2021/098780
- CN-A- 112 218 328
- CN-A- 112 350 809
- CN-A- 112 398 601
- CN-A- 113 037 400
- US-A1- 2022 268 912
- DONGGUK LIM (LG ELECTRONICS): "Consideration for NDPA in 11BF", vol. 802.11bf, no. 2, 7 February 2022 (2022-02-07), pages 1 - 26, XP068188844, Retrieved from the Internet <URL:https://mentor.ieee.org/802.11/dcn/21/11-21-1751-02-00bf-consideration-for-ndpa-in-11bf.pptx> [retrieved on 20220207]
- EMILY QI: "IEEE P802", vol. 802.11 - Editorial, 17 February 2022 (2022-02-17), pages 1 - 6097, XP068266993, Retrieved from the Internet <URL:https://ieee-sa.imeetcentral.com/p/aQAAAAAE5Qr7> [retrieved on 20230719]

## Description

### FIELD

The present invention relates to the field of wireless communications, and particularly to a communication method, an access point (AP), a station (STA), an electronic device and a computer-readable storage medium.

### BACKGROUND

Wireless local area network (WLAN) has the characteristics of flexibility, mobility and low cost. With the development of the communication technology and the growth of user needs, a deep application research for WLAN is continuously performed. For example, WLAN sensing is currently being studied, and it may be applied in scenarios, such as location discovery, proximity detection, and presence detection in a cluttered environment (e.g., a home environment and an enterprise environment).

WO2021/098780A1 provides a method for assisting localization of a target, which is applied to an STA, and comprises: receiving, from an AP, a wireless sensing sounding frame comprising radar measurement indication information; transmitting an uplink data packet to the AP, recording a first transmission moment, and according to the radar measurement indication information, performing radar measurement on the target to obtain a radar measurement result; receiving a downlink data packet from the AP and recording a first reception moment; and transmitting the first transmission moment, the first reception moment, and the radar measurement result to the AP.

DONGGUK LIM (LG ELECTRONICS): "Consideration for NDPA in 11BF", IEEE DRAFT; 11-21-1751-02-00BF-CONSIDERATION-FOR-NDPA-IN-11BF, IEEE-SA MENTOR, PISCATAWAY, NJ USA, vol. 802.11bf, no. 2 7 February 2022 (2022-02-07), pages 1-26 Retrieved from the Internet:URL:https://mentor.ieee.org/802.11/dcn/21/11-21-1751-02-00bf- consideration-for-ndpa-in-11bf.pptx [retrieved on 2022-02-07] discusses possible designs of the NDPA frame for WLAN sensing.

EMILY QI: "IEEE P802", IEEE DRAFT WGDS; 923620367659, IEEE-SA IMEET CENTRAL, PISCATAWAY, NJ USA, vol. 802.11 - Editorial 17 February 2022 (2022-02-17), pages 1-6097, XP068266993, Retrieved from the Internet: URL:https://ieee-sa.imeetcentral.com/p/aQAAAAAE5Qr7 [retrieved on 2023-07-19] relates to wireless LAN medium access control (MAC) and physical layer (PHY) specifications.

### SUMMARY

Various embodiments of the present invention provide the following technical solutions.

The present invention is defined by the appended claims.

The technical solution provided by the embodiments of the present invention improves the mechanism of using the trigger frame to trigger the feedback of the measurement result, and meets the requirements of the WLAN sensing measurement.

### BRIEF DESCRIPTION OF THE DRAWINGS

The above and other features of embodiments of the present invention will become apparent by describing in detail embodiments of the present invention with reference to the accompanying drawings, in which:
FIG. 1 shows examples of a manner for WLAN sensing;
FIG. 2 is a flowchart of a communication method according to an embodiment;
FIG. 3 is a flowchart of a communication method according to an embodiment;
FIG. 4 is a flowchart of a communication method according to another embodiment; and
FIG. 5 is a block diagram illustrating a communication apparatus according to an embodiment.

### DETAILED DESCRIPTION

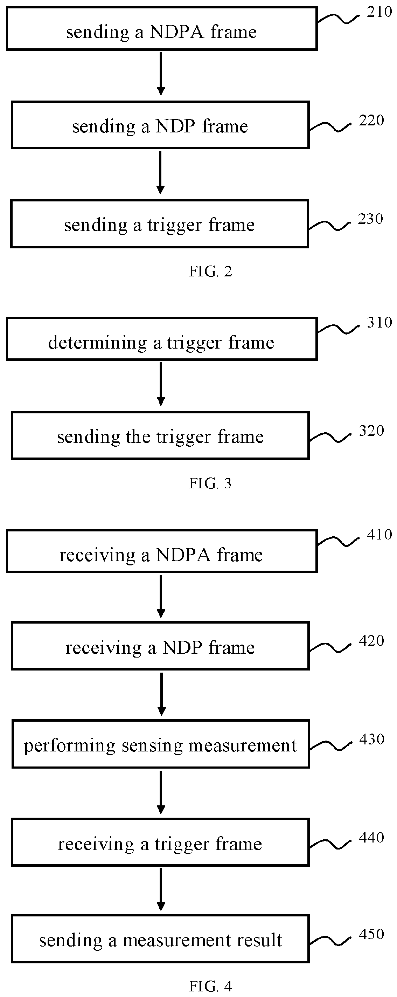

The invention corresponds to the embodiments disclosed in Figures 2 and 4 and the other embodiments are not encompassed by the wording of the claims but are considered as useful for understanding the invention. The following description with reference to the accompanying drawings is provided to assist in a comprehensive understanding of various embodiments of the present invention as defined by the appended claims. Various embodiments of the present invention include specific details, but these specific details are considered to be explanatory only. Additionally, descriptions of well-known techniques, functions, and constructions may be omitted for clarity and conciseness.

Terms used by the inventor in the embodiments of the present invention are only for providing a clear and consistent understanding of the present invention, and are not limited to the literal meanings. Accordingly, to those skilled in the art, the description of the various embodiments of the present invention is provided for the purpose of describing specific embodiments, and shall not be construed to limit the present invention.

It will be understood that, as used herein, "a," "an," and "the" in a singular form are intended to include plural forms, unless clearly indicated in the context otherwise. It should be further understood that the term "including" as used in the present invention refers to the presence of the described features, integers, steps, operations, elements and/or components but does not exclude the presence or addition of one or more other features, integers, steps, operations, elements, components and/or groups thereof.

It will be understood that terms such as "first" and "second" may be used herein for describing various elements, these elements should not be limited by these terms. These terms are only used for distinguishing one element from another. Accordingly, a first element discussed below may be termed a second element without departing from the teachings of the embodiments.

It will be understood that when an element is referred to as being "connected" or "coupled" to another element, it may be connected or coupled to the other element directly or via an intervening element. Additionally, "connected" or "coupled" as used herein may include wireless connections or couplings. As used herein, the term "and/or" or the expression "at least one of" refers to any one of associated listed items or any combination of one or more of the associated listed items.

Unless otherwise defined, all terms (including technical and scientific terms) used herein may be commonly understood by one ordinary skill in the art to which the present invention belongs.

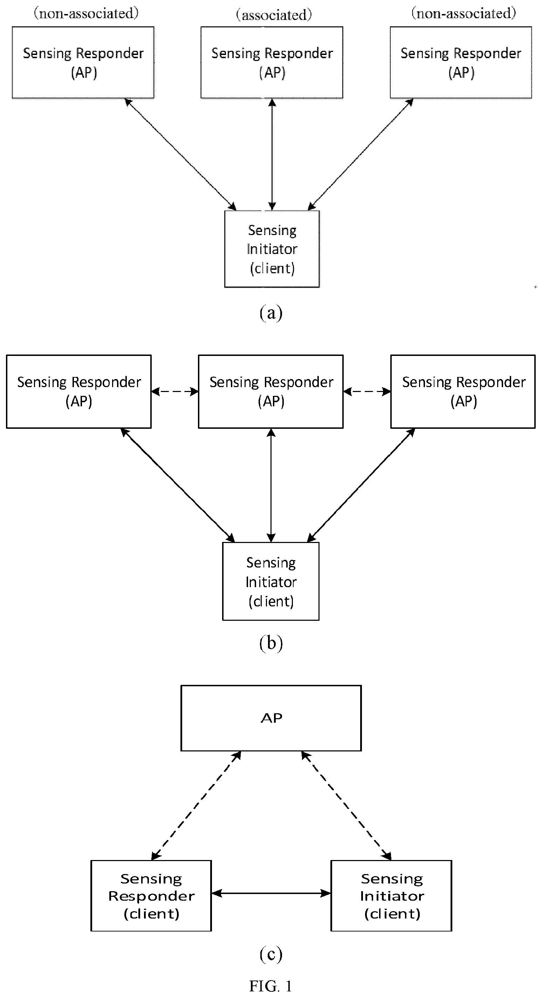

FIG. 1 shows examples of a manner for WLAN sensing.

A process of the WLAN sensing may be as follows. An initiator initiates the WLAN sensing (for example, initiates a WLAN sensing session), and multiple responders respond to it. Specific possible manners may be as shown in FIG. 1 (a), (b) and (c).

Referring to in FIG. 1 (a), when a WLAN sensing initiator (e.g., a client) initiates the WLAN sensing, multiple associated or non-associated WLAN sensing responders (e.g., three access points (APs)) may respond. "Associated" here may mean that an associated connection for communication has been established between the initiator and the responder, and "non-associated" may mean that no associated connection for communication has been established between the initiator and the responder.

For example, the client may include, but is not limited to, a cellular phone, a smartphone, a wearable device, a computer, a personal digital assistant (PDA), a personal communications system (PCS) device, a personal information manager (PIM), a personal navigation device (PND), a global positioning system, a multimedia device, an Internet of Things (IoT) device.

The AP may be a wireless switch used for a wireless network or an access device for the wireless network. The AP may include software applications and/or circuitry to enable other types of nodes in the wireless network to communicate with outside and inside of the wireless network through the AP. For example, the AP may be a terminal device or a network device equipped with a wireless fidelity (Wi-Fi) chip.

FIG. 1 (b) is similar to FIG. 1 (a), but in FIG. 1 (b), communication may occur between individual responders (APs).

Referring to FIG. 1 (c), both the WLAN sensing initiator and the WLAN sensing responder may be clients, and they may communicate with each other by connecting to the same AP.

Although it is shown in FIG. 1 (a), (b) and (c) that the client serves as the initiator and the AP serves as the responder, the present invention is not limited thereto. For example, according to embodiments of the present invention, the AP may serve as the initiator, and the client may serve as the responder. In addition, although in the above embodiments, the term "client" is used to describe the responder, the present invention is not limited thereto. For example, according to embodiments of the present invention, a non-AP station (hereinafter referred to as "station (STA)") may serve as the responder, and its embodiment may be similar to the above-mentioned client embodiment. For conciseness, repeated descriptions are omitted here. Furthermore, the number of initiators and responders is not limited to those shown in FIG. 1 (a), (b) and (c).

As an illustrative embodiment, the process of WLAN sensing may include: WLAN sensing session setup, WLAN sensing measurement setup, WLAN sensing measurement, WLAN sensing report, or WLAN sensing termination. In the WLAN sensing session setup, operating parameters associated with the sensing session may be determined and exchanged between devices. In the WLAN sensing measurement setup, one or more WLAN sensing measurements may be established for each WLAN sensing session and identified by a sensing measurement setup identifier (measurement setup ID). In addition, for each WLAN sensing measurement setup identifier, one or more WLAN sensing measurement instances may be setup and may be identified with a sensing measurement instance identifier (measurement instance ID). In the WLAN sensing measurement, sensing measurement may be performed for one or more WLAN sensing measurement instances. In the WLAN sensing report, sensing measurement result(s) may be reported. In the WLAN sensing termination, the device stops the measurement and terminates the sensing session. It will be understood that the various stages included in the above-mentioned WLAN sensing process are only explanatory, and the present invention is not limited thereto. Some of the stages may be omitted or combined, or the WLAN sensing process may be split in different ways.

In an embodiment of the WLAN sensing report, the initiator may first send a trigger frame to allocate a resource unit (RU) to the responder (for example, STA), and instruct the responder to report the measurement result or feed the measurement result back. The responder may selectively send one or more measurement results (such as, but not limited to, channel state information (CSI)) to the initiator with the RU indicated in the trigger frame sent by the initiator.

However, in the existing research, the mechanism for using trigger frame to trigger the measurement result feedback is not yet complete and needs to be enhanced.

In view of this, a communication method and a communication apparatus according to embodiments of the present invention are provided.

FIG. 2 is a flowchart of a communication method according to an embodiment. The communication method shown in FIG. 2 may be applied to an initiator of the WLAN sensing, for example, an access point (hereinafter may be referred to as "AP" for short).

Referring to FIG. 2, in block 210, a null data packet announcement (NDPA) frame is sent, where the NDPA frame carries a sensing measurement setup identifier (measurement setup ID). In other words, the communication method shown in FIG. 2 may correspond to the WLAN sensing measurement phase and the WLAN sensing report phase in the above-mentioned WLAN sensing process, and the sensing measurement setup identifier (measurement setup ID) may be determined or allocated by the AP during the WALN sensing setup phase before the communication method shown in FIG. 2 is performed. In block 210, the transmitted NDPA frame carries a sensing measurement setup identifier (measurement setup ID), thereby identifying for which sensing measurement setup identifier (measurement setup ID) the sensing measurement to be initiated.

In block 220, a null data packet (NDP) frame is sent. For example, the NDP frame may be called a WLAN sensing frame for WLAN sensing measurement. In a non-limiting example, the NDP frame may include operating parameter(s) required to perform the WLAN sensing measurement, such as the number of spatial streams, an operating bandwidth of the NDP frame, a long training field (LTF), and a packet extension (PE).

Although FIG. 2 shows that an NDPA frame and an NDP frame are sent in block 210 and block 220, respectively, embodiments of the present invention are not limited thereto. In the communication method shown in FIG. 2, blocks 210 and 220 may be performed multiple times, that is, multiple NDPA frames and NDP frames are sent sequentially or simultaneously to initiate multiple WLAN sensing measurements. In this case, the measurement setup identifier corresponding to (or carried by) each NDPA frame is different. Alternatively, NDPA frames containing the same measurement setup identifier correspond to different measurement instances, so that the WLAN sensing measurement is initiated for different measurement instances with the same measurement setup identifier. For example, in addition to carrying the measurement setup identifier, each NDPA frame may further carry a measurement instance identifier (measurement instance ID) corresponding to the measurement setup identifier, so that the WLAN sensing measurement corresponding to the measurement instance identifier is performed.

In block 230, a trigger frame is sent. The trigger frame is used to trigger at least one responder (STA) to send a measurement result. The trigger frame includes first information, and the first information indicates feeding back a measurement result of a sensing measurement instance corresponding to at least one sensing measurement setup.

In a descriptive example, the first information may be included in a common info field of the trigger frame. In addition, the common info field may further include: a bandwidth (for example, an uplink bandwidth (UL BW)) used for feeding the measurement result back. For example, the bandwidth (for example, the UL BW) may be identified as 20, 40, 80, 160, or 320 MHz bandwidth.

According to an embodiment of the present invention, the first information includes: at least one sensing measurement setup identifier respectively corresponding to at least one sensing measurement. In other words, the trigger frame may trigger a feedback of a measurement result of the sensing measurement instance corresponding to the at least one sensing measurement setup identifier.

For example, the trigger frame sent in block 230 may be used to trigger a delayed feedback or a prompt feedback. For example, if the trigger frame triggers the prompt feedback, the first information may include one measurement setup identifier (measurement setup ID) or one or more measurement instance identifiers (measurement instance IDs) corresponding to the one measurement setup identifier (measurement setup ID), so that the responder may send the sensing measurement result corresponding to the measurement setup identifier (measurement setup ID) or the measurement instance identifier (measurement instance ID) carried in the first information. For example, if the trigger frame triggers the delayed feedback, the first information may include multiple measurement setup identifiers (measurement setup IDs) or one or more measurement instance identifiers (measurement instance IDs) corresponding to each measurement setup ID.

In an embodiment of the present invention, the first information may include one sensing measurement setup identifier. For example, when the first information only contains the sensing measurement setup identifier and does not include its corresponding measurement instance identifier(s), the trigger frame carrying such first information may indicate that the responder needs to feed back the measurement results corresponding to all measurement instances contained in the sensing measurement setup identifier. For example, the first information may include one sensing measurement setup identifier and measurement instance identifiers corresponding to the one sensing measurement setup identifier, and the trigger frame may indicate that the responder needs to report measurement results of the corresponding measurement instances contained in the sensing measurement setup identifier.

In another embodiment of the present invention, the first information may include two or more sensing measurement setup identifiers. The sensing measurement setup identifier may be identified in different ways. For example, when the first information only contains two or more sensing measurement setup identifiers and does not contain their respective measurement instance identifiers, the trigger frame may indicate that the responder needs to feed back the measurement results corresponding to all measurement instances contained in each sensing measurement setup identifier. For example, the first information may include two or more sensing measurement setup identifiers and their respective measurement instance identifiers, and the trigger frame may indicate that the responder needs to report measurement results of the corresponding measurement instances contained in each sensing measurement setup identifier.

According to another embodiment of the present invention, the communication method may include first information: a start value of a sensing measurement setup identifier and an end value of a sensing measurement setup identifier. For example, if the start value of the sensing measurement setup identifier is that ID=1 and the end value of the sensing measurement setup identifier is that ID=3, the trigger frame indicates that the STA needs to feed back measurement results corresponding to three sensing measurement setup identifiers. When only containing the start value of the sensing measurement setup identifier and the end value of the sensing measurement setup identifier and containing no respective measurement instance identifier(s), the trigger frame may indicate that the responder needs to feed back the measurement results corresponding to all measurement instances contained in each sensing measurement setup identifier. However, the present invention is not limited thereto. For example, the first information may further include: at least one sensing measurement instance identifier corresponding to each sensing measurement setup identifier.

According to another embodiment of the present invention, the communication method may include first information: a start value of a sensing measurement setup identifier and the number of sensing measurement setup identifiers. For example, if the start value of the sensing measurement setup identifier is that ID =1 and the number of the sensing measurement setup identifiers is 4, the trigger frame indicates that the STA needs to feed back the measurement results corresponding to the four sensing measurements setup IDs starting from ID=1. When the first information only contains the start value of the sensing measurement setup identifier and the number of the sensing measurement setup identifiers but does not contain the respective measurement instance identifiers, the trigger frame may indicate that the responder needs to feed back the measurement results corresponding to all measurement instances contained in each sensing measurement setup identifier. However, the present invention is not limited thereto. For example, the first information may further include: at least one sensing measurement instance identifier corresponding to each sensing measurement setup identifier.

According to another embodiment of the present invention, the communication method may include first information: individually indicating at least one sensing measurement instance identifier corresponding to each sensing measurement setup identifier, as shown in the following Table 1. In Table 1, measurement setup ID1, measurement setup ID2 and the like indicate the sensing measurement setup identifiers, and measurement instance ID11, measurement instance ID12 and the like indicate the sensing measurement instance identifiers corresponding to the sensing measurement setup ID1. Measurement instance ID21, measurement instance ID22 and the like indicate the sensing measurement instance identifiers corresponding to the sensing measurement setup ID2. The trigger frame containing each identifier shown in Table 1 may indicate that the responder feeds back measurement results of sensing measurement instances corresponding to measurement instance ID11, measurement instance ID12, measurement instance ID21, and measurement instance ID22.

**Table 1**

| | | | | | | | |
|---|---|---|---|---|---|---|---|
| measurement setup ID1 | measurement instance ID11 | measurement instance ID12 | ... | measurement setup ID2 | measurement instance ID21 | measurement instance ID22 | ... |

According to another embodiment of the present invention, the communication method may include first information: the sensing measurement instance identifier being identified as (or including): a start value of a sensing measurement instance identifier (i.e., a sensing measurement instance start identifier) and an end value of a sensing measurement instance identifier (i.e., a sensing measurement instance end identifier), as shown in Table 2 below.

**Table 2**

| | | | | | | | |
|---|---|---|---|---|---|---|---|
| measurement setup ID1 | measurement instance start ID1 | measurement instance end ID1 | ... | measurement setup ID2 | measurement instance start ID2 | measurement instance end ID2 | ... |

In Table 2, measurement instance start ID1 and measurement instance end ID1 may respectively indicate a start value of the sensing measurement instance identifier and an end value of the sensing measurement instance identifier corresponding to the sensing measurement setup ID1, and measurement instance start ID2 and measurement instance end ID2 may respectively indicate a start value of the sensing measurement instance identifier and an end value of the sensing measurement instance identifier corresponding to the sensing measurement setup ID2.

According to another embodiment of the present invention, the communication method may include first information: the sensing measurement instance identifier being identified as (or including): a start value of a sensing measurement instance identifier and the number of sensing measurement instance identifiers, as shown in Table 3 below.

**Table 3**

| | | | | | | | |
|---|---|---|---|---|---|---|---|
| measurement setup ID1 | measurement instance start ID1 | number of instances 1 | ... | measurement setup ID2 | measurement instance start ID2 | number of instances 2 | ... |

In Table 3, measurement instance start ID1 and the number of instances, 1, may respectively indicate the start value of the sensing measurement instance identifier and the number of sensing measurement instance identifiers corresponding to the sensing measurement setup ID1, and measurement instance start ID2 and the number of instances, 2, may respectively indicate the start value of the sensing measurement instance identifier and the number of sensing measurement instance identifiers corresponding to the sensing measurement setup ID2.

It will be understood that although in Tables 2 and 3, the sensing measurement setup identifiers are identified as separate identifiers, the present invention is not limited thereto. For example, Tables 2 and 3 may be modified differently. For example, Table 4 shows a modified embodiment.

**Table 4**

| | | | | | | |
|---|---|---|---|---|---|---|
| measurement setup start ID | number of measurement setups | measurement instance start ID1 | measurement instance end ID1 | measurement instance start ID2 | measurement instance end ID2 | ... |

In Table 4, measurement setup start ID and the number of measurement setups respectively indicate a start value of the sensing measurement setup identifier and the number of sensing measurement setup identifiers. Measurement instance start ID1 and measurement instance end ID1 may respectively indicate a start value and an end value of a sensing measurement instance identifier corresponding to an initial sensing measurement setup identifier, and measurement instance start ID2 and measurement instance end ID2 may respectively indicate a start value and an end value of a sensing measurement instance identifier corresponding to the next sensing measurement setup identifier after the initial values.

It will be understood that the forms shown in Tables 1 to 4 are only examples, and the present invention is not limited thereto. For example, contents, positions and/or sequences shown in Tables 2 to 4 may be changed differently according to an identification manner of the sensing measurement setup identifier (i.e., being identified in a manner of the start value of the sensing measurement setup identifier and the end value of the sensing measurement setup identifier or a manner of the start value of the sensing measurement setup identifier and the number of the sensing measurement setup identifiers) and/or an identification manner of the sensing measurement instance identifier (i.e., being identified in a manner of the start value of the sensing measurement instance identifier and the end value of the sensing measurement instance identifier or a manner of the start value of the sensing measurement instance identifier and the number of the sensing measurement instance identifiers).

According to embodiments that are not part of the present invention, the trigger frame may have different formats. For example, the trigger frame may contain a measurement setup identifier. Since the trigger frame is used to trigger at least one STA to send prompt/delayed measurement result(s), the measurement setup identifiers that can be included are: a start value of the measurement setup identifier and an end value of the measurement setup identifier. For example, the start value of the measurement setup identifier is that ID =1 and the end value of the measurement setup identifier is that ID =3, the STA needs to feed back measurement results corresponding to the three measurement setup identifiers. Alternatively, for example, the trigger frame may contain the measurement setup identifier: the starting value of the measurement setup identifier and the number of measurement setup identifiers. For example, the starting value of the measurement setup identifier is that ID =1, and the number of measurement setups is 3, the STA needs to feed back measurement results corresponding to three measurement setup identifiers. Alternatively, for example, the trigger frame may contain a measurement instance identifier corresponding to the measurement setup identifier (each measurement setup identifier may include one or more measurement instances), so as to indicate that it needs to feed back a result of at least one measurement instance corresponding to the measurement setup identifier.

According to an embodiment that is not part of the present invention, if the trigger frame contains the measurement setup identifier, it may not include corresponding measurement instance identifier information bit, and this may indicate that the responder needs to feed back measurement results corresponding to all measurement instances contained in the measurement setup identifier.

According to an embodiment that is not part of the present invention, if the trigger frame only contains one or more measurement setup identifiers, it may include multiple corresponding measurement instance identifiers, for example, the start value and the end value of the measurement instance identifier, or the start value of the measurement instance identifier and the number of measurement instance identifiers.

According to an embodiment that is not part of the present invention, before transmitting the trigger frame, the AP will send the NDPA frame and the NDP frame for downlink sensing measurement (may send the frames for multiple times, and each NDPA frame corresponds to a different measurement setup identifier, or the NDPA frame containing the same measurement setup identifier corresponds to a different measurement instance).

According to an embodiment that is not part of the present invention, there may be different forms of trigger frames. For example, the AP sends a trigger frame to perform uplink sensing measurement, and the responder (STA) may send the NDP frame to the initiator, so that the AP may use the NDP frame to perform the WLAN sensing measurement. In this case, since the AP performs the WLAN sensing measurement, the trigger frame is not used to trigger reporting the measurement result. In order to distinguish this form of trigger frame, an identifier bit for differentiation may be set in the trigger frame in an embodiment according to the present invention. For example, the trigger frame may further include: a type identifier for indicating that the trigger frame is a frame indicating to feed back the measurement result.

Although the various information contained in the trigger frame is described above, the present invention is not limited thereto. For example, the trigger frame may further include an identifier of the station, so that the trigger frame is sent to the corresponding station that needs to feed back the measurement result. For example, the identifier of the station may be identified by AID or UID, where AID represents an identifier of the station that has established associated communication with the initiator AP, and UID represents an identifier of the station that has not established associated communication with the initiator AP. However, the present invention is not limited thereto. For example, the trigger frame may include a media access control (MAC) address of the station.

FIG. 3 is a flowchart of a communication method according to an embodiment. The communication method is applied to the initiator AP.

As shown in FIG. 3, in block 310, the trigger frame is determined.

The trigger frame may include various different contents, which will be described in detail with reference to different embodiments below. In embodiments of the present invention, the trigger frame may be determined in different manners. For example, the trigger frame may be generated or configured according to at least one of the following conditions: a WLAN sensing accuracy requirement, a channel state, a network condition, a load condition, a hardware capability of a transmitting/receiving device, a service type, and a relevant protocol provision, which are not limited in the present invention. In the embodiments of the present invention, the trigger frame may be obtained from an external device, which is not limited in the embodiments of the present invention.

In block 320, the trigger frame is sent. For example, the trigger frame may be sent to at least one responder STA to trigger the corresponding STA to feed back the measurement result.

Embodiments that are not part of the present invention may provide a communication method performed by the AP. The communication method may include: determining the trigger frame, where the trigger frame includes a type identifier, and the type identifier is set for the trigger frame used to trigger feeding back the measurement result of the sensing measurement instance corresponding to at least one sensing measurement setup; and sending the trigger frame.

Embodiments that are not part of the present invention may provide a communication method performed by the AP. The communication method may include: determining the trigger frame, where the trigger frame is used to trigger feeding back the measurement result of the sensing measurement instance corresponding to at least one sensing measurement setup, and the trigger frame includes: the start value of the sensing measurement setup identifier and the end value of the sensing measurement setup identifier; and sending the trigger frame.

Embodiments that are not part of the present invention may provide a communication method performed by the AP. The communication method may include: determining the trigger frame, where the trigger frame is used to trigger feeding back the measurement result of the sensing measurement instance corresponding to at least one sensing measurement setup, and the trigger frame includes: the start value of the sensing measurement setup identifier and the number of sensing measurement setup identifiers; and sending the trigger frame.

Embodiments that are not part of the present invention may provide a communication method performed by the AP. The communication method may include: determining the trigger frame, where the trigger frame is used to trigger feeding back the measurement result of the sensing measurement instance corresponding to at least one sensing measurement setup, and the trigger frame includes: the starting value of the sensing measurement instance identifier and the end value of the sensing measurement instance identifier; and sending the trigger frame.

Embodiments that are not part of the present invention may provide a communication method performed by the AP. The communication method may include: determining the trigger frame, where the trigger frame is used to trigger feeding back the measurement result of the sensing measurement instance corresponding to at least one sensing measurement setup, and the trigger frame includes: the starting value of the sensing measurement instance identifier and the number of sensing measurement instance identifiers; and sending the trigger frame.

Embodiments that are not part of the present invention may provide a communication method performed by the AP. The communication method may include: determining the trigger frame, where the trigger frame is used to trigger feeding back the measurement result of the sensing measurement instance corresponding to at least one sensing measurement setup, and the trigger frame includes: the start value of the sensing measurement setup identifier, the end value of the sensing measurement setup identifier, and the start value and the end value of the sensing measurement instance identifier corresponding to each sensing measurement setup identifier; and sending the trigger frame.

Embodiments that are not part of the present invention may provide a communication method performed by the AP. The communication method may include: determining the trigger frame, where the trigger frame is used to trigger feeding back the measurement result of the sensing measurement instance corresponding to at least one sensing measurement setup, and the trigger frame includes: the start value of the sensing measurement setup identifier, the end value of the sensing measurement setup identifier, and the starting value of the sensing measurement instance identifier and the number of sensing measurement instance identifiers corresponding to each sensing measurement setup identifier; and sending the trigger frame.

Embodiments that are not part of the present invention may provide a communication method performed by the AP. The communication method may include: determining the trigger frame, where the trigger frame is used to trigger feeding back the measurement result of the sensing measurement instance corresponding to at least one sensing measurement setup, and the trigger frame includes: the start value of the sensing measurement setup identifier, the number of sensing measurement setup identifiers, and the start value and the end value of the sensing measurement instance identifier corresponding to each sensing measurement setup identifier; and sending the trigger frame.

Embodiments that are not part of the present invention may provide a communication method performed by the AP. The communication method may include: determining the trigger frame, where the trigger frame is used to trigger feeding back the measurement result of the sensing measurement instance corresponding to at least one sensing measurement setup, and the trigger frame includes: the start value of the sensing measurement setup identifier, the number of sensing measurement setup identifiers, and the start value of the sensing measurement instance identifier and the number of sensing measurement instance identifiers corresponding to each sensing measurement setup identifier; and sending the trigger frame.

In addition, the above-mentioned embodiments may be combined with the communication method of FIG. 2. For example, blocks 310 and 320 of FIG. 3 may be performed after block 220 of FIG. 2. For conciseness, repeated descriptions are omitted here.

FIG. 4 is a flowchart of a communication method according to another embodiment. The communication method as shown in FIG. 4 is performed by a responder (e.g., STA).

As shown in FIG. 4, in block 410, a NDPA frame is received, where the NDPA frame carries a sensing measurement setup identifier; in block 420, a NDP frame is received; in block 430, sensing measurement corresponding to the sensing measurement setup identifier is performed according to the NDPA frame and the NDP frame; in block 440, a trigger frame is received, where the trigger frame includes first information, and the first information indicates feeding back a measurement result of a sensing measurement instance corresponding to at least one sensing measurement setup; in block 450, the measurement result is sent according to the trigger frame.

According to an embodiment of the present invention, the first information includes: at least one sensing measurement setup identifier respectively corresponding to the at least one sensing measurement setup.

According to an embodiment of the present invention, the at least one sensing measurement setup identifier includes: a start value of the sensing measurement setup identifier and an end value of the sensing measurement setup identifier.

According to an embodiment of the present invention, the at least one sensing measurement setup identifier includes: a start value of the sensing measurement setup identifier and a number of sensing measurement setup identifiers.

According to an embodiment of the present invention, the first information further includes: at least one sensing measurement instance identifier corresponding to each of the at least one sensing measurement setup identifier.

According to an embodiment of the present invention, the at least one sensing measurement instance identifier includes: a start value of the sensing measurement instance identifier and an end value of the sensing measurement instance identifier.

According to an embodiment of the present invention, the at least one sensing measurement instance identifier includes: a start value of the sensing measurement instance identifier and a number of sensing measurement instance identifiers.

According to an embodiment of the present invention, the trigger frame further includes: a type identifier for indicating that the trigger frame is a frame instructing to feed back the measurement result.

According to an embodiment of the present invention, the first information is included in a common information field of the trigger frame.

According to an embodiment of the present invention, the common information field further includes: a bandwidth for feeding back the measurement result.

According to an embodiment of the present invention, in block 450, the measurement result is sent with the bandwidth.

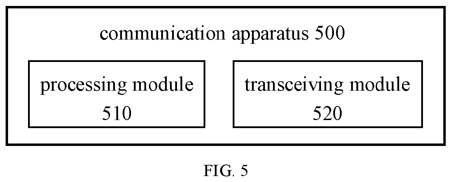

FIG. 5 is a block diagram illustrating a communication apparatus according to an embodiment. The communication apparatus 500 of FIG. 5 may include a processing module 510 and a transceiving module 520. In an embodiment of the present invention, the communication apparatus 500 shown in FIG. 5 may be applied to an initiator (AP). In another embodiment of the present invention, the communication apparatus 500 shown in FIG. 5 may be applied to a responder (STA).

In the case where the communication apparatus 500 shown in FIG. 5 is applied to the initiator (AP), the transceiver module 520 is configured to: send a NDPA frame, where the NDPA frame carries a sensing measurement setup identifier; send a NDP frame; and send a trigger frame, where the trigger frame includes first information, and the first information indicates feeding back a measurement result of a sensing measurement instance corresponding to at least one sensing measurement setup. The processing module 510 is configured to: control the overall operation of the communication apparatus 500, for example, determine information of the NDPA frame, NDP frame, and/or the trigger frame, and control the transceiving module 520 to send individual frames. That is, the communication apparatus 500 shown in FIG. 5 may perform the communication method described with reference to FIGS. 2 and 3, and the embodiments described with reference to Tables 1 to 4 and other modified embodiments may be applied thereto. In order to avoid redundancy, repeated descriptions are omitted here.

In the case where the communication apparatus 500 shown in FIG. 5 is applied to the responder (STA), the transceiving module 520 is configured to: receive a NDPA frame, where the NDPA frame carries a sensing measurement setup identifier, receive a NDP frame, receive a trigger frame, where the trigger frame includes first information, and the first information indicates feeding back a measurement result of a sensing measurement instance corresponding to at least one sensing measurement setup, and send the measurement result according to the trigger frame; and the processing module 510 is configured to: perform sensing measurement corresponding to the sensing measurement setup identifier according to the NDPA frame and the NDP frame. That is, the communication apparatus 500 shown in FIG. 5 may perform the communication method described with reference to FIG. 4, and the embodiments described with reference to Tables 1 to 4 and other modified embodiments may be applied thereto. In order to avoid redundancy, repeated descriptions are omitted here.

It will be understood that the communication apparatus 500 shown in FIG. 5 is only an example, and the embodiments of the present invention are not limited thereto. For example, the communication apparatus 500 may include other modules, such as a memory module and the like. Furthermore, individual modules in communication apparatus 500 may be combined into a complex module, or may be split into individual modules.

The communication method and communication apparatus according to the embodiments of the present invention improve the format of the trigger frame, so that the responder can transmit at least one measurement result according to the trigger frame.

Based on the same principle as the methods provided by the embodiments of the present invention, embodiments of the present invention further provide an electronic device. The electronic device includes a processor and a memory. The memory stores machine-readable instructions (also referred to as "computer programs"). The processor is configured to execute the machine-readable instructions to implement the methods described with reference to FIGs. 2 to 4.

Embodiments of the present invention further provide a computer-readable storage medium having stored therein a computer program that, when executed by a processor, causes the method described with reference to FIGS. 2 to 4 to be implemented.

In the embodiments, the processor may be used to implement or execute various explanatory logical blocks, modules and circuits described in the present invention, and may be a central processing unit (CPU), a general-purpose processor, a digital signal processor (DSP), an application specific integrated circuit (ASIC), a field programmable gate array (FPGA) or other programmable logic devices, transistor logic devices, hardware components or any combination thereof. The processor may also be a combination that implements computing functions, such as a combination of one or more microprocessors, and a combination of a DSP and a microprocessor.

In the embodiments, the memory may be, for example, a read-only memory (ROM), a random access memory (RAM), an electrically erasable programmable read-only memory (EEPROM), a compact disc read-only memory (CD-ROM) or other optical disc storage (including compressed optical discs, laser discs, optical discs, digital versatile discs, Blu-ray discs, etc.), magnetic disk storage media or other magnetic storage devices, or any other medium that can be used to carry or store program codes in the form of instructions or data structures that can be accessed by a computer, but is not limited thereto.

It should be understood that although various steps in the flowchart of the accompanying drawings are shown in sequence as indicated by arrows, these steps are not necessarily performed in the order indicated by arrows. Unless explicitly stated in this disclosure, the execution of these steps is not strictly limited in order, and they can be executed in other orders. In addition, at least some of the steps in the flow chart of the accompanying drawings may include multiple sub-steps or multiple stages. These sub-steps or stages may be executed at the same time, or may be executed at different times. Further, it does not necessarily need to perform the steps sequentially, they may be performed in turn or alternately with other steps or sub-steps of other steps or at least part of the stages.

While the present invention has been shown and described with reference to the embodiments, those skilled in the art will understand that various changes may be made in form and detail without departing from the scope of the present invention. Therefore, the scope of the present invention should not be limited to the embodiments, but should be defined by the appended claims.

## Claims

1. A communication method, performed by an access point, AP, the communication method comprising:
sending (210) a null data packet announcement, NDPA, frame, wherein the NDPA frame carries a sensing measurement setup identifier;
sending (220) a null data packet, NDP, frame for WLAN sensing measurement; and
sending (230) a trigger frame, wherein the trigger frame comprises first information, and the first information indicates feeding back a measurement result of a sensing measurement instance corresponding to at least one sensing measurement setup;
wherein the first information comprises: at least one sensing measurement setup identifier respectively corresponding to the at least one sensing measurement setup.

2. A communication method, performed by a station, STA, the communication method comprising:
receiving (410) a null data packet announcement, NDPA, frame, wherein the NDPA frame carries a sensing measurement setup identifier;
receiving (420) a null data packet, NDP, frame for WLAN sensing measurement;
performing (430) sensing measurement corresponding to the sensing measurement setup identifier according to the NDPA frame and the NDP frame;
receiving (440) a trigger frame, wherein the trigger frame comprises first information, and the first information indicates feeding back a measurement result of a sensing measurement instance corresponding to at least one sensing measurement setup;
sending (450) the measurement result according to the trigger frame;
wherein the first information comprises: at least one sensing measurement setup identifier respectively corresponding to the at least one sensing measurement setup.

3. The communication method according to claim 1 or 2, wherein the at least one sensing measurement setup identifier comprises: a start value of the at least one sensing measurement setup identifier and an end value of the at least one sensing measurement setup identifier, or
wherein the at least one sensing measurement setup identifier comprises: a start value of the at least one sensing measurement setup identifier and a number of the at least one sensing measurement setup identifier.

4. The communication method according to any one of claims 1 to 3, wherein the first information further comprises: at least one sensing measurement instance identifier corresponding to each of the at least one sensing measurement setup identifier.

5. The communication method according to claim 4, wherein the at least one sensing measurement instance identifier comprises: a start value of the at least one sensing measurement instance identifier and an end value of the at least one sensing measurement instance identifier, or
wherein the at least one sensing measurement instance identifier comprises: a start value of the at least one sensing measurement instance identifier and a number of the at least one sensing measurement instance identifier.

6. The communication method according to any one of claims 1 to 5, wherein the first information is comprised in a common information field of the trigger frame.

7. The communication method according to claim 6, wherein the common information field further comprises: a bandwidth for feeding back the measurement result.

8. The communication method according to any one of claims 1 to 7, wherein the trigger frame further comprises: a type identifier for indicating that the trigger frame is a frame instructing to feed back the measurement result.

9. An access point, AP, comprising:
a transceiving module (520) configured to:
send a null data packet announcement, NDPA, frame, wherein the NDPA frame carries a sensing measurement setup identifier;
send a null data packet, NDP, frame for WLAN sensing measurement; and
send a trigger frame, wherein the trigger frame comprises first information, and the first information indicates feeding back a measurement result of a sensing measurement instance corresponding to at least one sensing measurement setup;
wherein the first information comprises: at least one sensing measurement setup identifier respectively corresponding to the at least one sensing measurement setup.

10. A station, STA, comprising:
a transceiving module (520) configured to:
receive a null data packet announcement, NDPA, frame, wherein the NDPA frame carries a sensing measurement setup identifier,
receive a null data packet, NDP, frame for WLAN sensing measurement,
receive a trigger frame, wherein the trigger frame comprises first information, and the first information indicates feeding back a measurement result of a sensing measurement instance corresponding to at least one sensing measurement setup, and
send the measurement result according to the trigger frame; and
a processing module (510) configured to: perform sensing measurement corresponding to the sensing measurement setup identifier according to the NDPA frame and the NDP frame;
wherein the first information comprises: at least one sensing measurement setup identifier respectively corresponding to the at least one sensing measurement setup.

11. An electronic device, comprising:
a memory, a processor, and a computer program stored in the memory and executable by the processor, wherein the processor is configured to execute the computer program to perform the method according to any one of claims 1, and 3 to 8, when directly or indirectly dependent on claim 1.

12. An electronic device, comprising:
a memory, a processor, and a computer program stored in the memory and executable by the processor, wherein the processor is configured to execute the computer program to perform the method according to any one of claims 2, and 3 to 8, when directly or indirectly dependent on claim 2.

13. A computer-readable storage medium having stored therein a computer program that, when executed by a processor of an access point, AP, causes the processor to perform the method according to any one of claims 1, and 3 to 8, when directly or indirectly dependent on claim 1.

14. A computer-readable storage medium having stored therein a computer program that, when executed by a processor of a station, STA, causes processor to perform the method according to any one of claims 2, and 3 to 8, when directly or indirectly dependent on claim 2.

## Patentansprüche

1. Ein Kommunikationsverfahren, durchgeführt von einem Zugangspunkt, AP, wobei das Kommunikationsverfahren umfasst:
Senden (210) eines Null-Datenpaket-Ankündigungs-, NDPA,-Rahmens, wobei der NDPA-Rahmen einen Sensing-Messaufbau-Identifikator trägt;
Senden (220) eines Null-Datenpakets, NDP, für eine WLAN-Sensing-Messung; und
Senden (230) eines Trigger-Rahmens, wobei der Trigger-Rahmen erste Information umfasst und wobei die erste Information das Zurückmelden eines Messergebnisses einer Sensing-Messinstanz angibt, die zumindest einem Sensing-Messaufbau entspricht;
wobei die erste Information umfasst: zumindest einen Sensing-Messaufbau-Identifikator, der jeweils dem zumindest einen Sensing-Messaufbau entspricht.

2. Ein Kommunikationsverfahren, durchgeführt von einer Station, STA, wobei das Kommunikationsverfahren umfasst:
Empfangen (410) eines Null-Datenpaket-Ankündigungs-, NDPA,-Rahmens, wobei der NDPA-Rahmen einen Sensing-Messaufbau-Identifikator trägt;
Empfangen (420) eines Null-Datenpakets, NDP, für eine WLAN-Sensing-Messung;
Durchführen (430) einer Sensing-Messung, die dem Sensing-Messaufbau-Identifikator gemäß dem NDPA-Rahmen und dem NDP-Rahmen entspricht;
Empfangen (440) eines Trigger-Rahmens, wobei der Trigger-Rahmen erste Information umfasst und wobei die erste Information das Zurückmelden eines Messergebnisses einer Sensing-Messinstanz angibt, die zumindest einem Sensing-Messaufbau entspricht;
Senden (450) des Messergebnisses gemäß dem Trigger-Rahmen;
wobei die erste Information umfasst: zumindest einen Sensing-Messaufbau-Identifikator, der jeweils dem zumindest einen Sensing-Messaufbau entspricht.

3. Das Kommunikationsverfahren nach Anspruch 1 oder 2, wobei der zumindest eine Sensing-Messaufbau-Identifikator umfasst: einen Startwert des zumindest einen Sensing-Messaufbau-Identifikators und einen Endwert des zumindest einen Sensing-Messaufbau-Identifikators, oder
wobei der zumindest eine Sensing-Messaufbau-Identifikator umfasst: einen Startwert des zumindest einen Sensing-Messaufbau-Identifikators und eine Anzahl des zumindest einen Sensing-Messaufbau-Identifikators.

4. Das Kommunikationsverfahren nach einem der Ansprüche 1 bis 3, wobei die erste Information ferner umfasst: zumindest einen Sensing-Messinstanz-Identifikator, der jeweils jedem der zumindest einen Sensing-Messaufbau-Identifikatoren entspricht.

5. Das Kommunikationsverfahren nach Anspruch 4, wobei der zumindest eine Sensing-Messinstanz-Identifikator umfasst: einen Startwert des zumindest einen Sensing-Messinstanz-Identifikators und einen Endwert des zumindest einen Sensing-Messinstanz-Identifikators, oder
wobei der zumindest eine Sensing-Messinstanz-Identifikator umfasst: einen Startwert des zumindest einen Sensing-Messinstanz-Identifikators und eine Anzahl des zumindest einen Sensing-Messinstanz-Identifikators.

6. Das Kommunikationsverfahren nach einem der Ansprüche 1 bis 5, wobei die erste Information in einem gemeinsamen Informationsfeld des Trigger-Rahmens enthalten ist.

7. Das Kommunikationsverfahren nach Anspruch 6, wobei das gemeinsame Informationsfeld ferner umfasst: eine Bandbreite für das Zurückmelden des Messergebnisses.

8. Das Kommunikationsverfahren nach einem der Ansprüche 1 bis 7, wobei der Trigger-Rahmen ferner umfasst: einen Typ-Identifikator zum Anzeigen, dass der Trigger-Rahmen ein Rahmen ist, der anweist, das Messergebnis zurückzumelden.

9. Ein Zugangspunkt, AP, umfassend:
ein Sende-/Empfangsmodul (520), das konfiguriert ist zum:
Senden eines Null-Datenpaket-Ankündigungs-, NDPA,-Rahmens, wobei der NDPA-Rahmen einen Sensing-Messaufbau-Identifikator trägt;
Senden eines Null-Datenpakets, NDP, für eine WLAN-Sensing-Messung; und
Senden eines Trigger-Rahmens, wobei der Trigger-Rahmen erste Information umfasst und wobei die erste Information das Zurückmelden eines Messergebnisses einer Sensing-Messinstanz angibt, die zumindest einem Sensing-Messaufbau entspricht;
wobei die erste Information umfasst: zumindest einen Sensing-Messaufbau-Identifikator, der jeweils dem zumindest einen Sensing-Messaufbau entspricht.

10. Eine Station, STA, umfassend:
ein Sende-/Empfangsmodul (520), das konfiguriert ist zum:
Empfangen eines Null-Datenpaket-Ankündigungs-, NDPA,-Rahmens, wobei der NDPA-Rahmen einen Sensing-Messaufbau-Identifikator trägt,
Empfangen eines Null-Datenpakets, NDP, für eine WLAN-Sensing-Messung,
Empfangen eines Trigger-Rahmens, wobei der Trigger-Rahmen erste Information umfasst und wobei die erste Information das Zurückmelden eines Messergebnisses einer Sensing-Messinstanz angibt, die zumindest einem Sensing-Messaufbau entspricht, und
Senden des Messergebnisses gemäß dem Trigger-Rahmen; und
ein Verarbeitungsmodul (510), das konfiguriert ist zum: Durchführen einer Sensing-Messung, die dem Sensing-Messaufbau-Identifikator gemäß dem NDPA-Rahmen und dem NDP-Rahmen entspricht;
wobei die erste Information umfasst: zumindest einen Sensing-Messaufbau-Identifikator, der jeweils dem zumindest einen Sensing-Messaufbau entspricht.

11. Eine elektronische Vorrichtung, umfassend:
einen Speicher, einen Prozessor und ein im Speicher gespeichertes und durch den Prozessor ausführbares Computerprogramm, wobei der Prozessor konfiguriert ist, das Computerprogramm auszuführen, um das Verfahren nach einem der Ansprüche 1 sowie 3 bis 8 auszuführen, wenn direkt oder indirekt abhängig von Anspruch 1.

12. Eine elektronische Vorrichtung, umfassend:
einen Speicher, einen Prozessor und ein im Speicher gespeichertes und durch den Prozessor ausführbares Computerprogramm, wobei der Prozessor konfiguriert ist, das Computerprogramm auszuführen, um das Verfahren nach einem der Ansprüche 2 sowie 3 bis 8 auszuführen, wenn direkt oder indirekt abhängig von Anspruch 1.

13. Ein computerlesbares Speichermedium, in dem ein Computerprogramm gespeichert ist, das, wenn es von einem Prozessor eines Zugangspunkts, AP, ausgeführt wird, den Prozessor veranlasst, das Verfahren nach einem der Ansprüche 1 sowie 3 bis 8 auszuführen, wenn direkt oder indirekt abhängig von Anspruch 1.

14. Ein computerlesbares Speichermedium, in dem ein Computerprogramm gespeichert ist, das, wenn es von einem Prozessor ausgeführt wird, das Verfahren nach einem der Ansprüche 2 sowie 3 bis 8 implementieren lässt.

## Revendications

1. Procédé de communication mis en œuvre par un point d'accès, AP, le procédé de communication comprenant:
l'envoi (210) d'une trame d'annonce de paquets de données nulles, NDPA, la trame NDPA transportant un identifiant de configuration de mesure de détection;
l'envoi (220) d'une trame de paquets de données nulles, NDP, pour la mesure de détection WLAN; et
l'envoi (230) d'une trame de déclenchement, la trame de déclenchement comprenant des premières informations, et les premières informations indiquent le renvoi d'un résultat de mesure d'une instance de mesure de détection correspondant à au moins une configuration de mesure de détection;
dans lequel les premières informations comprennent: au moins un identifiant de configuration de mesure de détection correspondant respectivement à l'au moins une configuration de mesure de détection.

2. Procédé de communication mis en œuvre par une station, STA, le procédé de communication comprenant:
la réception (410) d'une trame d'annonce de paquets de données nulles, NDPA, la trame NDPA transportant un identifiant de configuration de mesure de détection;
la réception (420) d'une trame de paquets de données nulles, NDP, pour la mesure de détection WLAN;
la réalisation (430) d'une mesure de détection correspondant à l'identifiant de configuration de mesure de détection selon la trame NDPA et la trame NDP;
la réception (440) d'une trame de déclenchement, la trame de déclenchement comprenant les premières informations, et les premières informations indiquent le renvoi d'un résultat de mesure d'une instance de mesure de détection correspondant à au moins une configuration de mesure de détection;
l'envoi (450) du résultat de la mesure en fonction de la trame de déclenchement;
dans lequel les premières informations comprennent: au moins un identifiant de configuration de mesure de détection correspondant respectivement à l'au moins une configuration de mesure de détection.

3. Procédé de communication selon la revendication 1 ou 2, dans lequel l'au moins un identifiant de configuration de mesure de détection comprend: une valeur de départ de l'au moins un identifiant de configuration de mesure de détection et une valeur de fin de l'au moins un identifiant de configuration de mesure de détection, ou
dans lequel l'au moins un identifiant de configuration de mesure de détection comprend: une valeur de départ de l'au moins un identifiant de configuration de mesure de détection et un numéro de l'au moins un identifiant de configuration de mesure de détection.

4. Procédé de communication selon l'une quelconque des revendications 1 à 3, dans lequel les premières informations comprennent en outre: au moins un identifiant d'instance de mesure de détection correspondant à chacun de l'au moins un identifiant de configuration de mesure de détection.

5. Procédé de communication selon la revendication 4, dans lequel l'au moins un identifiant d'instance de mesure de détection comprend: une valeur de départ de l'au moins un identifiant d'instance de mesure de détection et une valeur de fin de l'au moins un identifiant d'instance de mesure de détection, ou
dans lequel l'au moins un identifiant d'instance de mesure de détection comprend: une valeur de départ de l'au moins un identifiant d'instance de mesure de détection et un numéro de l'au moins un identifiant d'instance de mesure de détection.

6. Procédé de communication selon l'une quelconque des revendications 1 à 5, dans lequel les premières informations sont comprises dans un champ d'information commun de la trame de déclenchement.

7. Procédé de communication selon la revendication 6, dans lequel le champ d'informations commun comprend en outre: une largeur de bande pour renvoyer le résultat de la mesure.

8. Procédé de communication selon l'une quelconque des revendications 1 à 7, dans lequel la trame de déclenchement comprend en outre: un identifiant de type pour indiquer que la trame de déclenchement est une trame demandant de renvoyer le résultat de la mesure.

9. Point d'accès, AP, comprenant:
un module d'émission et de réception (520) configuré pour:
envoyer une trame d'annonce de paquets de données nulles, NDPA, la trame NDPA transportant un identifiant de configuration de mesure de détection;
recevoir une trame de paquets de données nulles, NDP, pour la mesure de détection WLAN; et
envoyer une trame de déclenchement, la trame de déclenchement comprenant des premières informations, et les premières informations indiquent le renvoi d'un résultat de mesure d'une instance de mesure de détection correspondant à au moins une configuration de mesure de détection;
dans lequel les premières informations comprennent: au moins un identifiant de configuration de mesure de détection correspondant respectivement à l'au moins une configuration de mesure de détection.

10. Station, STA, comprenant:
un module d'émission et de réception (520) configuré pour:
recevoir une trame d'annonce de paquets de données nulles, NDPA, la trame NDPA transportant un identifiant de configuration de mesure de détection,
recevoir une trame de paquets de données nulles, NDP, pour la mesure de détection WLAN,
recevoir une trame de déclenchement, la trame de déclenchement comprenant des premières informations, et les premières informations indiquent le renvoi d'un résultat de mesure d'une instance de mesure de détection correspondant à au moins une configuration de mesure de détection; et
envoyer le résultat de la mesure en fonction de la trame de déclenchement; et
un module de traitement (510) configuré pour effectuer une mesure de détection correspondant à l'identifiant de configuration de mesure de détection selon la trame NDPA et la trame NDP;
dans lequel les premières informations comprennent: au moins un identifiant de configuration de mesure de détection correspondant respectivement à l'au moins une configuration de mesure de détection.

11. Dispositif électronique, comprenant:
une mémoire, un processeur, et un programme informatique stockés dans la mémoire et exécutables par le processeur, dans lequel le processeur est configuré pour exécuter le programme informatique pour mettre en œuvre le procédé selon l'une quelconque des revendications 1, et 3 à 8, lorsqu'elles dépendent directement ou indirectement de la revendication 1.

12. Dispositif électronique, comprenant:
une mémoire, un processeur, et un programme informatique stockés dans la mémoire et exécutables par le processeur, dans lequel le processeur est configuré pour exécuter le programme informatique pour mettre en œuvre le procédé selon l'une quelconque des revendications 2, et 3 à 8, lorsqu'elles dépendent directement ou indirectement de la revendication 2.

13. Support d'enregistrement lisible par ordinateur sur lequel est stocké un programme informatique qui, lorsqu'il est exécuté par un processeur d'un point d'accès, AP, amène le processeur à mettre en œuvre le procédé selon l'une quelconque des revendications 1, et 3 à 8 lorsqu'elles dépendent directement ou indirectement de la revendication 1.

14. Support d'enregistrement lisible par ordinateur sur lequel est stocké un programme informatique qui, lorsqu'il est exécuté par un processeur d'une station, STA, amène le processeur à mettre en œuvre le procédé selon l'une quelconque des revendications 2, et 3 à 8 lorsqu'elles dépendent directement ou indirectement de la revendication 2.
